# EUROPEAN PATENT SPECIFICATION

(11) **EP 1 234 958 B1**
(45) Date of publication and mention of the grant of the patent: **21.06.2006**
(21) Application number: 02003761.0
(22) Date of filing: 19.02.2002
(51) Int. Cl.: F01L 13/00, F02D 13/02

(54) **A method of and apparatus for controlling quantity of air drawn into internal combustion engine**
Verfahren und Vorrichtung zum steuerung der Einlassluftquantität in einer Brennkraftmaschine
Procédé et dispositif pour commander la quantité d'air aspirée par un moteur à combustion interne

(30) Priority: 27.02.2001 JP 2001051422
(43) Date of publication of application: 28.08.2002
(73) Proprietor: NISSAN MOTOR CO., LTD., Yokohama-shi, Kanagawa 221-0023 (JP)
(72) Inventor: Takemura, Shinichi, Yokohama-shi, Kanagawa 236-0028 (JP); Aoyama, Shunichi, Yokosuka-shi, Kanagawa 237-0066 (JP); Nohara, Tsuneyasu, Fujisawa-shi, Kanagawa 252-0813 (JP); Sugiyama, Takanobu, Yokohama-shi, Kanagawa 236-0052 (JP)
(74) Representative: Grünecker, Kinkeldey, Stockmair & Schwanhäusser Anwaltssozietät

(56) References cited:
- EP-A- 0 317 372
- US-A- 5 074 260
- US-A- 5 572 962
- US-A- 5 622 144
- US-A- 5 937 809
- PATENT ABSTRACTS OF JAPAN vol. 011, no. 188 (M-599), 17 June 1987 (1987-06-17) -& JP 62 013708 A (NISSAN MOTOR CO LTD), 22 January 1987 (1987-01-22)
- PATENT ABSTRACTS OF JAPAN vol. 012, no. 340 (M-740), 13 September 1988 (1988-09-13) -& JP 63 100214 A (FUJI HEAVY IND LTD), 2 May 1988 (1988-05-02)

## Description

The present invention relates to a method of controlling a quantity of air drawn into an internal combustion engine according to the preamble of independent claim 1 and to an apparatus for continuously controlling a quantity of air drawn into an internal combustion engine according to the preamble of independent claim 8.

On gasoline engines, an amount of air drawn into the engine is generally controlled by adjusting a throttle opening of a throttle valve disposed in an air intake passage of an induction system. In this type of gasoline engine, there is a great pumping loss under low load conditions wherein the throttle valve is kept at a less throttle opening. In recent years, there have been proposed and developed various engines employing a variable valve actuation system such as a variable valve timing and lift control system, a variable valve event and lift control system, and the like. On such variable valve actuation system equipped engines, an intake air quantity is controlled by variably adjusting an engine valve timing, in particular an intake valve closure timing (IVC) and/or a valve lift of the intake valve, instead of using throttle opening adjustment. One such variable valve actuation system equipped internal combustion engine has been disclosed in Japanese Patent Provisional Publication No. 11-117777 (hereinafter is referred to as "JP11-117777" and corresponding to U.S. Pat. No. 6,039,026 issued March 21, 2000). In the variable valve actuation system equipped engine as disclosed in JP11-117777, intake and exhaust valves are constructed by electromagnetically-controlled engine valves. Taking into account a less pumping loss, during low and mid engine load operations, an intake air quantity is controlled by variably controlling a valve closure timing of the electromagnetically-controlled intake valve or a lift of the intake valve, while the throttle opening is adjusted to a predetermined value corresponding to a substantially full-throttle position. In contrast, at idling or during excessively low load operations and at highloadoperations, the intake air quantity is controlled by way of throttle opening adjustment.

The intake air quantity control based on variable valve timing control (in particular, variable intake valve closure timing control) has the following drawback. According to the IVC control, the intake valve closure timing has to be advanced gradually from a B.D.C. position (bottom dead center) as the engine load decreases. Therefore, during excessively low load operations such as at idling, there is an increased tendency for the IVC to be controlled to a timing point closer to a T.D.C position (top dead center). In other words, the intake valve tends to close at a timing that the reciprocating piston does not yet move down sufficiently. This reduces an effective compression ratio. In such a case, adequate pressure and temperature cannot be obtained at the BDC on compression stroke, and thereby combustion is deteriorated.

In contrast to the above, when controlling the intake air quantity only by way of valve-lift control instead of using the IVC control, the intake valve itself acts as a flow constricting orifice or a throttling orifice.

Therefore, in case of only the valve-lift control, it is impossible to satisfactorily reduce the pumping loss.

Prior art document JP 62-13708 teaches a multi-cylinder internal combustion engine comprising an intake variable valve operating device including a variable intake valve angle opening device and a variable intake valve lift device in combination with a respective exhaust variable valve opening device. According to the teaching of JP 62-13708, the valve lift of the intake valve is controlled to a certain very small valve lift during idling of the engine. Caused by the very small valve lift during idling, an advantageously very small or zero overlap can be achieved so as to reduce the amount of residual gases in the combustion chamber. Thus, combustion stability in the idling range can be enhanced.

Prior art document JP 63-100214 teaches a valve control device for an automobile engine, wherein stabilization of combustion during engine idling can be achieved by way of small valve opening and small valve lift. In particular, during low-speed or during low-load operation, a variable valve operating mechanism is associated with two intake ports and an exhaust port is operated at a narrow valve opening angle mode. Accordingly, the valve overlap is adjusted to a minus valve overlap so that direct gas flow from the intake side to the exhaust side is prevented to enhance the charging efficiency of intake air. Thus, internal exhaust gas recirculation is reduced and fuel economy and combustion stability in the idling range is ensured. On the other hand, during high-speed or during high-load operation, the variable valve operating mechanism is associated with the two intake ports and the two exhaust ports and operated at a wide valve opening angle mode. Thus, an adequate quantity of intake air and adequate exhaust gas can be ensured to enhance engine power output.

Prior art document US 5,622,144 teaches a system for operating an internal combustion engine including an intake valve and an exhaust valve. Said system comprises an exhaust variable valve timing mechanism and an intake variable valve timing mechanism. Said system is controlled so as to reduce a valve overlap by advancing both of exhaust valve opening timing and exhaust valve closing timing and to retard an intake valve opening timing and simultaneously to advance an intake valve closing timing by shortening or reducing the intake valve opening time period during low-speed low-load operation or during low-speed high-load operation. Furthermore, during low-speed middle-load operation, the control system controls both of intake and exhaust variable valve timing mechanisms so as to increase the valve overlap by retarding both of exhaust valve opening timing and exhaust valve closing timing and to advance intake valve opening timing and simultaneously to retard intake valve closing timing by lengthening or increasing the intake valve opening time period. Thus, said prior art document is directed to timing control, in particular valve overlap control achieved by intake and exhaust variable valve timing mechanisms but does not teach a specific valve lift control.

Further prior art document US 5,074,260 teaches a valve drive device and a valve driving method for internal combustion engine, wherein the control system enables the camshaft supporting apparatus to be selectively displaced in response to the engine operating condition such as rotational speed so that the valve timing and valve lift for the respective valves can be independently varied to produce optimal engine operating characteristics over a wide range of engine operating conditions. In particular, the intake valve operating characteristic (valve lift, valve timing and phase) and the exhaust valve operating characteristic are variably controlled depending on whether the engine is conditioned in a high engine speed range or in a low engine speed range.

A method and an apparatus for controlling a quantity of air drawn into an internal combustion engine as indicated above can be taken from the prior art document EP 0 317 372 A1. In particular, said prior art method comprises the steps of varying the angular phase of the crankshaft and the cam shaft to control the timing of opening of the valve and releasing the force applied by the cam to open the valve while it is being opened to control the timing of the closing of the intake or exhaust valve. The related apparatus includes a phase control mechanism disposed between the crankshaft and the camshaft and a lift control mechanism disposed between the cam and the intake or exhaust valve. Both mechanisms are hydraulically operated and controlled in response to engine operating conditions. Accordingly, said prior art document teaches the control characteristics achieved by only using the phase control means, the control characteristic achieved by only using a lift control means and the control characteristic achieved by both of the phase control means and the lift control means. Thus, the operation of the intake valve can be controlled appropriately depending on operating conditions of the engine. Since the amount of intake air and the timing of introducing intake air including the timing of fully closing the intake valve can freely be controlled, it is possible to dispense with even the intake throttle valve of the engine with the result that the internal combustion engine can be operated with high efficiency because it is free of the problem of pumping loss which would otherwise be caused by the intake throttle valve.

It is an objective of the present invention to provide a method and an apparatus for continuously controlling a quantity of air drawn into an internal combustion engine as indicated above wherein a stable intake air quantity control can be realized.

According to the method aspect of the present invention, that objective is solved by a method of continuously controlling a quantity of air drawn into an internal combustion engine having the features of claim 1.

Preferred embodiments are laid down in the dependent claims.

Moreover, according to the apparatus aspect of the present invention, that objective is solved by an apparatus for continuously controlling a quantity of air drawn into an internal combustion engine having the features of claim 8.

Preferred embodiments are laid down in the dependent claims.

Hereinafter, the present invention is illustrated and explained by means of preferred embodiments in conjunction with the accompanying drawings. In the drawings wherein:
Fig. 1 is a perspective view illustrating a variable valve actuation system incorporated in an intake air quantity control system of one embodiment.
Fig. 2 is a characteristic map showing both a valve lift control area and a valve timing control area.
Fig. 3 is an explanatory view showing valve operating characteristics under various engine/vehicle operating conditions.
Fig. 4 is an enlarged view illustrating an essential part of the intake valve and valve seat.
Fig. 5 is an explanatory view showing a specified condition that a fluid passage area defined between a valve seating face of the intake valve and a valve-seat face corresponds to a minimum fluid passage area in comparison with a fluid passage area at any other section.
Fig. 6 is a longitudinal cross section showing a tappet equipped with a built-in valve clearance adjuster.

### DESCRIPTION OF THE PREFERRED EMBODIMENTS

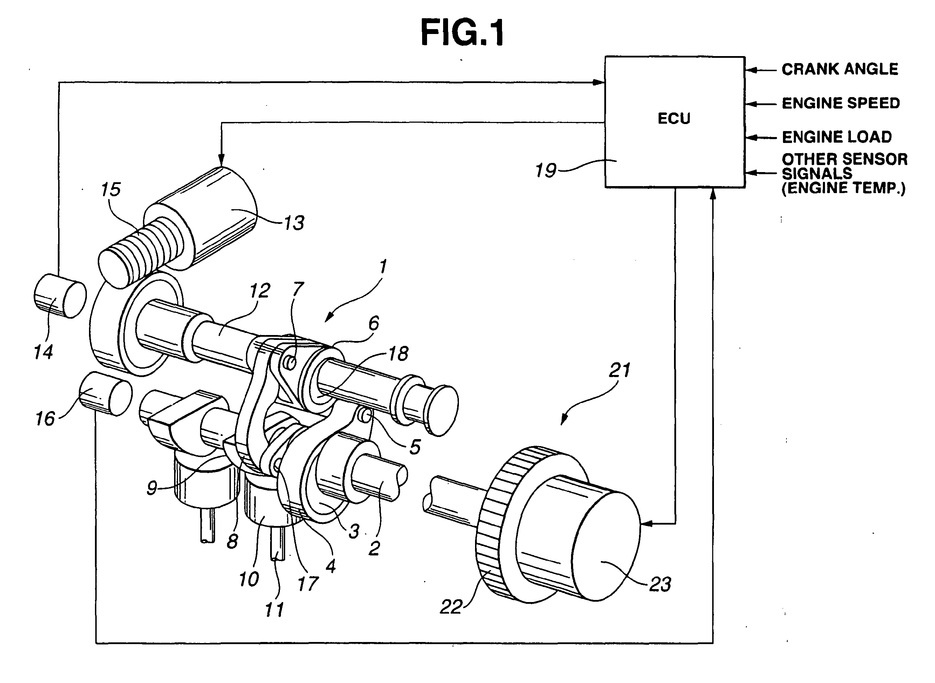

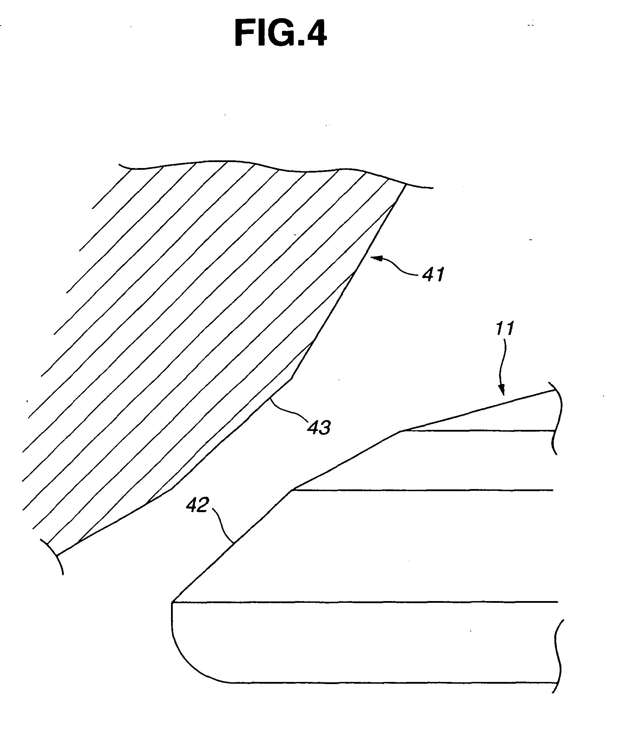

Referring now to the drawings, particularly to Fig. 1, the method of and apparatus for controlling an intake air quantity is exemplified in a spark-ignited gasoline engine for an automotive vehicle. Fig. 4 shows the variable valve actuation system incorporated in the intake air quantity control system of the embodiment. The variable valve actuation system has a mechanical valve actuation mechanism that an intake valve 11 is driven in synchronization with rotation of an engine crankshaft. The variable valve actuation system has two different control mechanisms, namely a variable lift and working-angle control mechanism 1 and a variable phase control mechanism 21 combined with each other. Variable lift and working-angle control mechanism 1 functions to change (increase or decrease) both a valve lift and a working angle θ of intake valve 11, depending on engine/vehicle operating conditions. Variable phase control mechanism 21 functions to change (advance or retard) the angular phase at the maximum valve lift point (at the central angle φ of the working angle).

The fundamental structure of variable lift and working-angle control mechanism 1 is hereunder described briefly in reference to Fig. 1.

Variable lift and working-angle control mechanism 1 is comprised of a drive shaft 2 rotatably supported by a cam bracket (not shown) located on the upper portion of a cylinder head (not shown), a first eccentric cam 3 fixedly connected to drive shaft 2 byway of press-fitting, a control shaft 12 which is rotatably supported by the same cam bracket above the drive shaft and arranged parallel to the drive shaft and has a second eccentric cam 18, a rocker arm 6 oscillatingly or rockably supported on second eccentric cam 18, and a rockable cam 9 which is in abutted-engagement with a tappet 10 attached to the upper portion of the valve stem of intake valve 11. First eccentric cam 3 and rocker arm 6 are mechanically linked to each other through a link arm 4 that rotates relative to first eccentric cam 3. On the other hand, rocker arm 6 and rockable cam 9 are linked to each other through a link member 8, so that the oscillating motion of rocker arm 6 is produced by link arm 4. Drive shaft 2 is driven by the engine crankshaft via a timing chain or a timing belt. First eccentric cam 3 is cylindrical in shape. The central axis of the cylindrical outer peripheral surface of first eccentric cam 3 is eccentric to the axis of drive shaft 2 by a predetermined eccentricity. A substantially annular portion of link arm 4 is rotatably fitted onto the cylindrical outer peripheral surface of first eccentric cam 3. Rocker arm 6 is oscillatingly supported at its substantially central portion by second eccentric cam 18 of control shaft 12. A protruded portion of link arm 4 is linked to one end of rocker arm 6 by means of a connecting pin 5. The upper end of link member 8 is linked to the other end of rocker arm 6 by means of a connecting pin 7. The axis of second eccentric cam 18 is eccentric to the axis of control shaft 12, and thus the center of oscillating motion of rocker arm 6 can be varied by changing the angular position of control shaft 12. Rockable cam 9 is rotatably fitted onto the outer periphery of drive shaft 2. One end of rockable cam 9 is linked to link member 8 by means of a connecting pin 17. Rockable cam 9 is formed on its lower surface with a base-circle surface portion being concentric to drive shaft 2 and a moderately-curved cam surface portion being continuous with the base-circle surface portion and extending toward the one end portion of rockable cam 9. The base-circle surface portion and the cam surface portion of rockable cam 9 are designed to be brought into abutted-contact (sliding-contact) with a designated point or a designated position of the upper surface of the associated intake-valve tappet 10, depending on an angular position of rockable cam 9 oscillating. That is, the base-circle surface portion functions as a base-circle section within which a valve lift is zero. A predetermined angular range of the cam surface portion being continuous with the base-circle surface portion functions as a ramp section. A predetermined angular range of a cam nose portion of the cam surface portion being continuous with the ramp section functions as a lift section. Returning again to Fig. 1, control shaft 12 of variable lift and working-angle control mechanism 1 is driven within a predetermined angular range by means of a lift and working-angle control actuator 13. In the shown embodiment, lift and working-angle control actuator 13 is comprised of a geared motor composed of a worm 15 plus worm wheel, and a servo motor having a driving connection with control shaft 12. The servomotor is controlled in response to a control signal from an electronic engine control unit (ECU) 19. Instead of using such a servomotor-driven actuator, a hydraulic actuator may be used as lift and working-angle control actuator 13. In this case, a controlled pressure applied to the hydraulic actuator is regulated by way of a hydraulic control module that is responsive to a control signal from ECU 19.

Actuator 13 is designed so that the angular position of the output shaft of actuator 13 is forced toward and held at an initial angular position by a return spring with actuator 13 de-activated. In a state that actuator 13 is kept at the initial angular position, the intake valve is operated with the valve lift reduced and the working angle reduced. The angular position of control shaft 12 is detected by a control-shaft sensor 14. Variable lift and working-angle control mechanism 1 operates as follows.

During rotation of drive shaft 2, link arm 4 moves up and down by virtue of cam action of first eccentric cam 3. The up-and-down motion of link arm 4 causes oscillating motion of rocker arm 6. The oscillating motion of rocker arm 6 is transmitted via link member 8 to rockable cam 9, and thus rockable cam 9 oscillates. By virtue of cam action of rockable cam 9 oscillating, intake-valve tappet 10 is pushed and therefore intake valve 11 lifts. If the angular position of control shaft 12 is varied by actuator 13, an initial position of rocker arm 6 varies and as a result an initial position (or a starting point) of the oscillating motion of rockable cam 9. Assuming that the angular position of second eccentric cam 18 is shifted from a first angular position that the axis of second eccentric cam 18 is located just under the axis of control shaft 12 to a second angular position that the axis of second eccentric cam 18 is located just above the axis of control shaft 12, as a whole rocker arm 6 shifts upwards. As a result, the one end portion of rockable cam 9 is relatively pulled upwards. That is, the initial position (the starting point) of rockable cam 9 is shifted so that the rockable cam itself is inclined in a direction that the cam surface portion of rockable cam 9 moves apart from intake-valve tappet 10. With rocker arm 6 shifted upwards, when rockable cam 9 oscillates during rotation of drive shaft 2, the base-circle surface portion is held in contact with intake-valve tappet 10 for a comparatively long time period. In other words, a time period within which the cam surface portion is held in contact with intake-valve tappet 10 becomes short. As a consequence, a valve lift becomes small.

Additionally, a lifted period (i.e., a working angle θ) from an intake-valve open timing (IVO) to an intake-valve closure timing (IVC) becomes reduced.

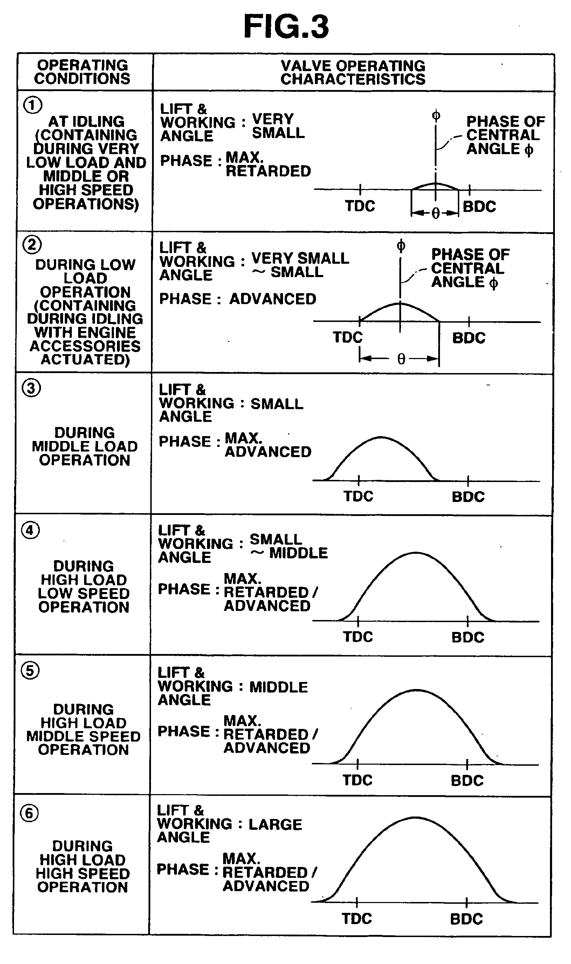

Conversely when the angular position of second eccentric cam 18 is shifted from the second angular position that the axis of second eccentric cam 18 is located just above the axis of control shaft 12 to the first angular position that the axis of second eccentric cam 18 is located just under the axis of control shaft 12, as a whole rocker arm 6 shifts downwards. As a result, the one end portion of rockable cam 9 is relatively pushed down. That is, the initial position (the starting point) of rockable cam 9 is shifted so that the rockable cam itself is inclined in a direction that the cam surface portion of rockable cam 9 moves towards intake-valve tappet 10. With rocker arm 6 shifted downwards, when rockable cam 9 oscillates during rotation of drive shaft 2, a portion that is brought into contact with intake-valve tappet 10 is somewhat shifted from the base-circle surface portion to the cam surface portion. As a consequence, a valve lift becomes large. Additionally, a lifted period (i.e., a working angle θ) from intake-valve open timing IVO to intake-valve closure timing IVC becomes extended. The angular position of second eccentric cam 18 can be continuously varied within limits by means of actuator 13, and thus valve operating characteristics (valve lift and working angle) also vary continuously (see Fig. 3). As can be seen from the valve operating characteristics of Fig. 3, variable lift and working-angle control mechanism 1 can scale up and down both the valve lift and the working angle continuously simultaneously. The variable lift and working-angle control mechanism 1 incorporated in the intake air quantity control system of the embodiment, in accordance with a change in valve lift and a change in working angle θ, intake-valve open timing IVO and intake-valve closure timing IVC vary symmetrically with each other. Details of such a variable lift and working-angle control mechanism being set forth, for example, in U.S. Pat. No. 5,988,125 (corresponding to Japanese Patent Provisional Publication No. 11-107725) issued November 23, 1999 to Seinosuke HARA et al.

Returning to Fig. 1, variable phase control mechanism 21 is comprised of a sprocket 22 and a phase control actuator 23. Sprocket 22 is provided at the front end of drive shaft 2. Phase control actuator 23 is provided to enable drive shaft 2 to rotate relative to sprocket 22 within a predetermined angular range. Sprocket 22 has a driven connection with the engine crankshaft through a timing chain (not shown) or a timing belt (not shown). In the shown embodiment, phase control actuator 23 is comprised of an electromagnetically-controlled actuator that is controlled in response to a control signal from ECU 19. In lieu thereof, actuator 23 may be comprised of a hydraulic actuator. In this case, a controlled pressure applied to the hydraulic actuator is regulated by way of a hydraulic control module, which is responsive to a control signal from ECU 19. The relative rotation of drive shaft 2 to sprocket 22 in one rotational direction results in a phase advance at the maximum intake-valve lift point (at the central angle φ). The relative rotation of drive shaft 2 to sprocket 22 in the opposite rotational direction results in a phase retard at the maximum intake-valve lift point. That is, only the phase of working angle (i.e., the angular phase at central angle φ) is advanced or retarded, with no valve-lift change and no working-angle change. The relative angular position of drive shaft 2 to sprocket 22 can be continuously varied within limits by means of actuator 23, and thus the angular phase at central angle φ also vary continuously. The control state of variable phase control mechanism 21 is monitored or detected by a drive-shaft sensor 16 that is located near the rear end of drive shaft 2 and senses or detects changes in angular phase of drive shaft 2. As discussed above, in the shown embodiment, for variable lift and working-angle control and variable phase control, the first sensor (control-shaft sensor 14) that detects a valve lift and working angle θ and the second sensor (drive-shaft sensor 16) that detects an angular phase at central angle φ are added and variable lift and working-angle control mechanism 1 and variable phase control mechanism 21 are feedback-controlled respectively based on signals from the first and second sensors at a "closed-loop" mode. Instead thereof, variable lift and working-angle control mechanism 1 and variable phase control mechanism 21 may be merely feedforward-controlled depending on engine/vehicle operating conditions at an "open-loop" mode.

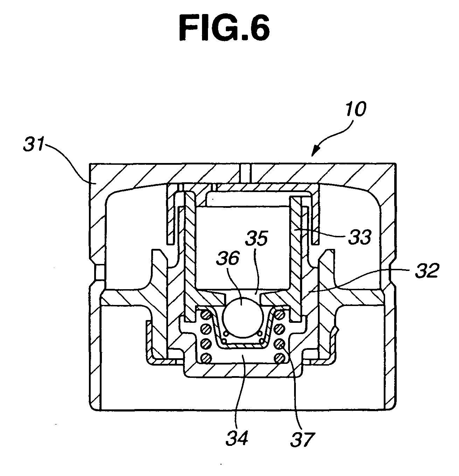

Referring now to Fig. 6, there is shown the detailed structure of tappet 10 used within the variable valve actuation system of the intake air quantity control system of embodiment. As clearly shown in Fig. 6, tappet 10 has a built-in, hydraulic valve clearance adjuster. The hydraulic valve clearance adjuster of tappet 10 is comprised of a substantially cylindrical body 31, a plunger 32 disposed in cylindrical body 31, a substantially cylindrical plunger seat 33, a hydraulic pressure chamber 34 defined between plunger 32 and plunger seat 33, a check ball 36, and a return spring 37. Body 31 is slidably supported in the cylinder head. Plunger 32 is in abutted-engagement with the valve stem of intake valve 11. Check ball 36 is spring-loaded to close a central communication hole 35 bored in the central portion of plunger seat 33. As set forth above, the structure of the valve clearance adjuster equipped tappet 10 is somewhat similar to a conventional hydraulic valve lifter. Lubricating oil is introduced into hydraulic pressure chamber 34 by virtue of the bias of return spring 37, while the intake valve 11 is seated on the valve seat. Therefore, the valve clearance is constantly maintained at zero.

In the intake air quantity control system of the embodiment employing the previously-discussed variable valve actuation system at the intake valve side, it is possible to properly control the amount of air drawn into the engine by variably adjusting the valve operating characteristics for intake valve 11, independent of throttle opening control. Practically, it is preferable that a slight vacuum exists in an induction system for the purpose of recirculation of blow-by fumes. For this reason, instead of using a throttle valve, it is desirable to provide a throttling mechanism or a flow-constricting mechanism upstream of an air intake passage of the induction system to create a vacuum.

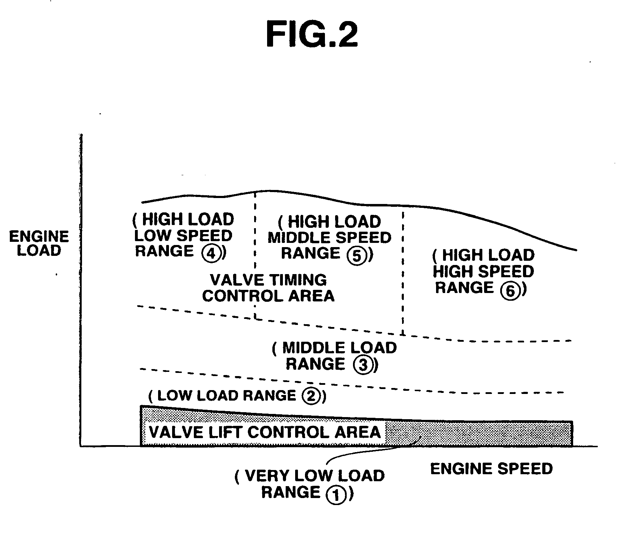

Details of the variable intake air quantity control executed by the system of the embodiment, utilizing the variable lift and working-angle control and the variable phase control are hereunder described in reference to Figs. 2 and 3.

Referring now to Fig. 2, there is shown the control characteristic map showing how the valve lift control area and the valve timing control area have to be varied relative to engine speed and engine load. Of various engine/vehicle operating conditions, that is, during idling ① (containing during very low load and middle or high speed operations), during low load operation ② (containing during idling with engine accessories actuated), during middle load operation ③, during high load low speed operation ④, during high load middle speed operation ⑤, and during high load and high speed operation ⑥, the operating conditions ②, ③, ④, ⑤, and ⑥ are included in the valve timing control area. On the other hand, the operating condition ① is included in the valve lift control area. Within the valve lift control area, that is, during idling ① (containing during very low load and middle or high speed operations), the intake air quantity is controlled, aiming mainly at the valve lift control for intake valve 11. In contrast, within the valve timing control area, that is, under the operating conditions ②, ③, ④, ⑤, and ⑥, the intake air quantity is controlled, aiming mainly at the valve timing control, in particular the IVC control.

Referring now to Fig. 3, there is shown the valve operating characteristics (a lift and a working angle θ, and a phase of working angle, i.e., an angular phase at a central angle φ) under various engine/vehicle operating conditions ①, ②, ③, ④, ⑤, and ⑥. As can be appreciated from the valve operating characteristics of Fig. 3, at idling (containing during very low load and middle or high speed operations) ①, the valve lift of intake valve 11 is adjusted or controlled to such a very small lift amount that the intake air quantity is unaffected by a change in the angular phase at central angle φ. The working angle θ is also adjusted to a very small working angle. On the other hand, the phase of central angle φ is kept at a maximum phase-retarded timing value, and thus the intake valve closure timing IVC is adjusted to a given timing value just before BDC. Owing to the use of the very small valve lift at idling (containing during very low load and middle or high speed operations) ①, intake air flow is suitably throttled or choked by way of a slight aperture defined between the valve seating face of intake valve 11 and the valve-seat face. This ensures a stable very small intake-air flow rate required in the very low load operating range ①. Additionally, the IVC is adjusted to the given timing value just before BDC, and therefore an effective compression ratio (generally defined as a ratio of the effective cylinder volume corresponding to the maximum working medium volume to the effective clearance volume corresponding to the minimum working medium volume) becomes a sufficiently high value.

In the low load operating ranger ② containing during idling with engine accessories actuated, the valve lift and working angle θ are adjusted to greater values than those used under the very low operating range ①. On the other hand, the phase of central angle φ is somewhat advanced as compared to the very low operating range ①. That is, in the low load operating range ②, the intake air quantity control is performed by way of the variable phase control combined with the variable lift and working-angle control. By phase-advancing the IVC, the intake air quantity can be controlled to a comparatively small quantity. As a result of this, the valve lift and working angle θ of intake valve 11 are somewhat increased, thus reducing the pumping loss.

As discussed above, there is a less change in the intake air quantity occurring owing to a phase change in central angle φ in the very low load operating range ①, such as at idling. Thus, when switching from the very low load ranger ① to low load range ②, it is necessary to execute the variable lift and working-angle control (enlargement of the valve lift and working angle θ) rather than the variable phase control. In the same manner, during idling with engine accessories actuated, for example with an air-conditioning compressor activated, the variable lift and working-angle control takes priority over the variable phase control.

In the middle load operating range ③, that the engine load further increases and combustion is more stable than the low load operating range ②, the valve lift and working angle θ are adjusted to greater values than those used under the low operating range ②. On the other hand, the phase of central angle φ is further advanced as compared to the low operating range ②. At a certain engine load within the middle load operating range ③, a maximum phase-advanced timing value for the phase of central angle φ can be obtained. This allows a more complete utilization of internal EGR (exhaust gas or combustion gas recirculated from the exhaust port through the engine cylinder back to the intake port side). Therefore, it is possible to more effectively reduce the pumping loss.

In the high load operating range, that is, under high load low speed operation ④, under high load middle speed operation ⑤, and under high load and high speed operation ⑥, the valve lift and working angle θ are adjusted to greater values than those used under the middle operating range ③. Additionally, in order to attain a suitable intake valve timing, variable phase control mechanism 21 is controlled. As clearly shown in Fig. 3, the valve lift and working angle are further increased or enlarged from high load low speed operating range ④, via high load middle speed operating range ⑤, to high load and high speed operating range ⑥. On the other hand, the phase of central angle φ is adjusted to the maximum phase-retarded timing value or a phase-advanced timing value, depending upon the throttle opening or the accelerator opening.

As set out above, according to the intake air quantity control of the embodiment, in very low load operating range ① such as at idling, as the valve lift control area, the stable very small air flow rate control is achieved mainly by way of the valve lift control for intake valve 11. Engine loads that are on a border between the valve lift control area and the valve timing control area, in other words, a switching point between very low load operating range ① and low load operating range ② can be varied or compensated for depending on a state of combustion of the engine, that is, a combustion stability. To realize more simple control procedures, the switching point between very low load operating range ① and low load operating range ② may be varied or compensated for depending on engine temperature detected, such as engine coolant temperature or engine oil temperature. Such compensation for the switching point between very low load operating range ① and low load operating range ② enables the valve timing control area to enlarge without deteriorating the combustion stability of the engine, thereby ensuring the reduced pumping loss.

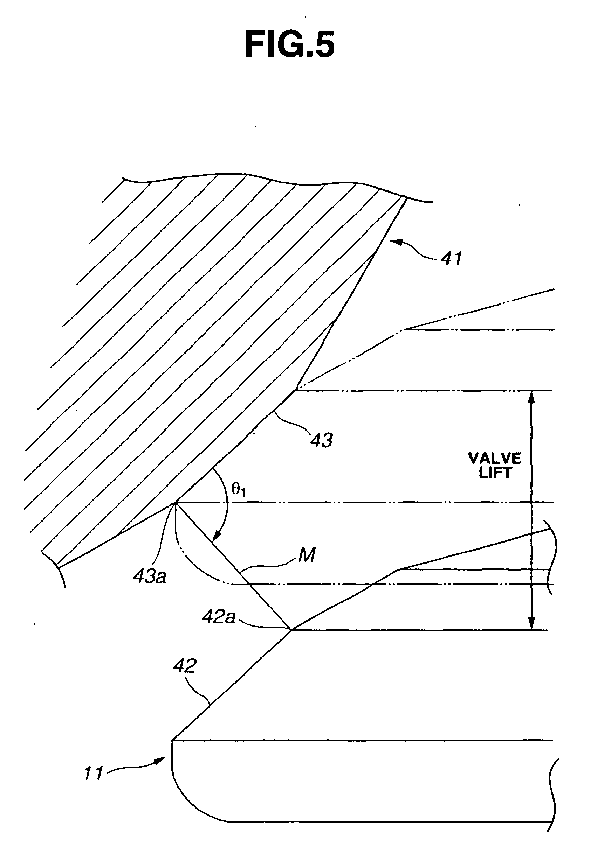

Referring now to Figs. 4 and 5, there is shown the less-deposits valve and valve-seat layout used in the variable valve actuation system of the intake air quantity control system of the embodiment. As can be seen from the enlarged view of Fig. 4, a valve seat 41 is formed as a ring-shaped surface in the cylinder head. Intake valve 11 has a tapered valve seating face (or a seal face) 42, which comes to rest against the valve seat 41. In more detail, valve seat 41 has a tapered valve-seat face 43. To provide a tight valve seating and a tight seal for prevention of any leakage of the air/fuel mixture or burned gases, seal face 42 of intake valve 11 and valve-seat face 43 are designed to fit close together properly. When intake valve 11 closes, seal face 42 and valve-seat face 43 are brought into closely abutted-engagement with each other. Therefore, it is difficult to form deposits on these faces 42 and 43. During operation, owing to frictional contact between seal face 42 and valve-seat face 43, it is possible to maintain a good dimensional accuracy of each of the tapered faces 42 and 43, and therefore seal face 42 and valve-seat face 43 tend to be easily automatically maintained as almost the same tapered surface. For this reason, during operation with the very small valve lift of intake valve 11 in the very low load operating range ① such as during idling, it is preferable to set or determine the valve and valve-seat layout so that a fluid passage area defined between seal face 42 of intake valve 11 and valve-seat face 43 is a minimum fluid passage area less than a fluid passage area at any other section in the air intake passage.

Fig. 5 shows the concrete specified condition that the fluid passage area defined between tapered faces 42 and 43 corresponds to the minimum fluid passage area. That is, if an angle θ₁ between valve-seat face 43 and a line segment M between and including an inner edge 42a of seal face 42 and an outer edge 43a of valve-seat face 43 is within a predetermined angular range of 90 degrees or less, the fluid passage area defined between tapered faces 42 and 43 corresponds to the minimum fluid passage area. In other words, if the valve lift further increases from the valve-lift range within which the previously-noted angle θ₁ between valve-seat face 43 and line segment M is within the predetermined angular range of 90 degrees or less, the minimum fluid passage area occurs at any other section except the section between tapered faces 42 and 43. In this case, in particular during the very low load operation, there is a possibility that the accuracy for intake air quantity control is affected by deposits formed on the tapered faces. As set forth above, seal face 42 and valve-seat face 43 are maintained for a long term as high-precision tapered faces. Thus, during the very low load operation it is possible to accurately produce a stable very small intake-air flow rate depending on the magnitude of valve lift by bringing the minimum fluid passage area between seal face 42 and valve-seat face 43 during the very small valve-lift operating mode such as during idling.

As can be seen in Fig. 1, in the shown embodiment two intake valves (11, 11) are provided for each engine cylinder. In this case, there is a difficulty in producing a stable very small intake-air flow rate by accurately managing both a valve lift of one of two intake valves and a valve lift of the other intake valve. For this reason, in the very low load operating range such as at idling, a valve lift of one of two intake valves contained in the same engine cylinder is fixed to a predetermined value substantially corresponding to a zero lift. Preferably, a required intake air quantity is attained by way of variable valve lift control for only the other intake valve. This method is superior in quality control.

Moreover, in the variable valve actuation system shown in Fig. 1, the ramp section of rockable cam 9 is formed as a constant-velocity ramp, thus producing a substantially constant ramp velocity regardless of the magnitudes of valve lift and working angle. Therefore, in the very low load range, in other words, during the very small valve-lift operating mode, it is possible to execute the improved intake air quantity control that ensures a stable very small intake-air flow rate.

## Claims

1. A method of continuously controlling a quantity of air drawn into an internal combustion engine by varying operating characteristics of an intake valve (11), the method comprising:
controlling a valve lift of the intake valve (11) within a range wherein the quantity of air is determined by a valve lift and a valve opening angle (θ) of the intake valve (11); and
controlling a valve phase angle of the intake valve (11);
**characterized by**
controlling the valve lift of the intake valve (11) within the range wherein the quantity of air is determined by a valve lift and a valve opening angle (θ) with a fixed valve phase angle substantially corresponding to a maximum phase-retarded timing value of the intake valve (11) in a very low load operating range (①) containing during idling; and
controlling the valve lift of the intake valve (11) within the range wherein the quantity of air is determined by a valve lift and a valve opening angle (θ) of the intake valve (11) and controlling a valve phase angle of the intake valve (11), in operating ranges (②, ③, ④, ⑤, ⑥) except the very low load operating range (①).

2. A method according to claim 1, **characterized in that** the valve phase angle in the very low load operating range (①) is set to be closer to a bottom dead center on intake stroke as compared to the valve phase angle in a low load operating range (②) adjacent to the very low load operating range (①).

3. A method according to claim 1 or 2, **characterized in that** an engine load that is on a border between the very low load operating range (①) and the low load operating range (②) is varied depending on a state of combustion of the engine.

4. A method according to at least one of the claims 1 to 3, **characterized in that** an engine load that is on a border between the very low load operating range (①) and the low load operating range (②) is varied depending on an engine temperature.

5. A method according to at least one of the claims 1 to 4, **characterized by** controlling the valve lift within a range wherein a fluid passage area defined between a seal face (42) of the intake valve (11) and a valve-seat face (43) is less than a fluid passage area at any other section in an air intake passage, in the very low load operating range (①).

6. A method according to at least one of the claims 1 to 5, **characterized in that** the engine has a valve actuation mechanism that the intake valve (11) is mechanically driven in synchronization with rotation of a crankshaft of the engine; and the valve actuation mechanism has a valve clearance adjuster (31, 32, 33, 34, 35, 36, 37) that constantly maintains a valve clearance at a zero clearance.

7. A method according to claim 6, **characterized in that** the valve actuation mechanism comprises a first variable mechanism (1) that continuously varies both the valve lift and the working angle (θ) of the intake valve (11), and a second variable mechanism (21) that varies the phase of the central angle (ϕ).

8. An apparatus for continuously controlling a quantity of air drawn into an internal combustion engine by varying operating characteristics of an intake valve (11), the apparatus comprising:
a first variable mechanism (1) for varying a valve lift of the intake valve (11) within a range wherein the quantity of air is determined by a valve lift and a valve opening angle (θ) of the intake valve (11); and
a second variable mechanism (21) for varying a valve phase angle of the intake valve (11);
a control unit (19) configured to be electronically connected to the first and second variable mechanisms (1, 21) for variably controlling the quantity of air drawn into the engine,
**characterized in that**
the control unit (19) is configured for controlling the valve lift of the intake valve (11) within the range wherein the quantity of air is determined by a valve lift and a valve opening angle (θ) with a fixed valve phase angle substantially corresponding to a maximum phase-retarded timing value of the intake valve (11) in a very low load operating range (①) containing during idling; and
the control unit (19) is configured for controlling the valve lift of the intake valve (11) within the range wherein the quantity of air is determined by a valve lift and a valve opening angle (θ) of the intake valve (11) and controlling a valve phase angle of the intake valve (11) in operating ranges (②, ③, ④, ⑤, ⑥) except the very low load operating range ().

9. An apparatus according to claim 8, **characterized in that** an engine load that is on a border between the very low load operating range (①) and the low load operating range (②) is varied depending on either of a state of combustion of the engine and an engine temperature.

10. An apparatus according to claim 8 or 9, **characterized in that** the control unit (19) is configured for controlling the valve lift within the range wherein an angle (θ₁) between a valve-seat face (43) and a line segment (M) between and including an inner edge (42a) of a seal face (42) of the intake valve (11) and an outer edge (43a) of the valve-seat face (43) is within a predetermined angular range of 90 degrees or less, in the very low load operating range (①).

## Patentansprüche

1. Verfahren des kontinuierlichen Steuerns einer Luftmenge, angesaugt in eine Brennkraftmaschine durch Verändern von Betriebscharakteristika des Einlassventiles (11), wobei das Verfahren aufweist:
Steuern eines Ventilhubs des Einlassventiles (11) innerhalb eines Bereiches, in dem die Luftmenge durch einen Ventilhub und einen Ventilöffnungswinkel (θ) des Einlassventiles (11) bestimmt wird; und
Steuern eines Ventilphasenwinkels des Einlassventiles (11);
**gekennzeichnet durch**
Steuern des Ventilhubs des Einlassventiles (11) innerhalb des Bereiches, in dem die Luftmenge **durch** einen Ventilhub und einen Ventilöffnungswinkel (θ) bestimmt wird mit einem feststehenden Ventilphasenwinkel, der im Wesentlichen einem maximalen phasenverzögerten Zeitpunktwert des Einlassventiles (11) in einem sehr niedrigen Lastbetriebsbereich (①), der den Leerlauf enthält, entspricht; und
Steuern des Ventilhubs des Einlassventiles (11) innerhalb des Bereichs, in dem die Luftmenge **durch** einen Ventilhub und einen Ventilöffnungswinkel (θ) des Einlassventiles (11) bestimmt wird und Steuern eines Ventilphasenwinkels des Einlassventiles (11) in Betriebsbereichen (②③④⑤⑥) mit Ausnahme eines sehr niedrigen Lastbetriebsbereiches (①).

2. Verfahren nach Anspruch 1, **dadurch gekennzeichnet, dass** der Ventilphasenwinkel in einem sehr niedrigen Lastbetriebsbereich (①) festgelegt wird, höher zu einem unteren Totpunkt bei dem Einlasshub zu sein, im Vergleich zu dem Ventilphasenwinkel in einem niedrigen Lastbetriebsbereich (②), benachbart zu dem sehr niedrigen Lastbetriebsbereich (①).

3. Verfahren nach Anspruch 1 oder 2, **dadurch gekennzeichnet, dass** eine Motorlast, die an einer Grenze zwischen dem sehr niedrigen Lastbetriebsbereich (①) und dem niedrigen Lastbetriebsbereich (②) ist, in Abhängigkeit von einem Verbrennungszustandes des Motors verändert wird.

4. Verfahren nach zumindest einem der Ansprüche 1 bis 3, **dadurch gekennzeichnet, dass** eine Motorlast, die an einer Grenze zwischen dem sehr niedrigen Lastbetriebsbereich (①) und dem niedrigen Lastbetriebsbereich (②) ist, in Abhängigkeit von einer Motortemperatur verändert wird.

5. Verfahren nach zumindest einem der Ansprüche 1 bis 4, **gekennzeichnet durch** Steuern des Ventilhubs innerhalb eines Bereiches, in dem eine Fluid- Kanalfläche, gebildet zwischen einer Dichtungsfläche (42) des Einlassventiles (11) und einer Ventilsitzfläche (43) geringer ist als eine Fluid- Kanalfläche an einem anderen Abschnitt in einem Lufteinlasskanal, in dem sehr niedrigen Lastbetriebsbereich (①).

6. Verfahren nach zumindest einem der Ansprüche 1 bis 5, **dadurch gekennzeichnet, dass** der Motor einen Ventilbetätigungsvorrichtung hat, dass das Einlassventil (11) mechanisch synchron mit der Drehung einer Kurbelwelle des Motors angetrieben wird; und
die Ventilbetätigungsvorrichtung einen Ventilspalteinsteller (31, 32, 33, 34, 35. 36, 37) hat, der einen Ventilspalt bei einem Null- Spalt konstant beibehält.

7. Verfahren nach Anspruch 6, **dadurch gekennzeichnet, dass** die Ventilbetätigungsvorrichtung aufweist eine erste veränderbare Vorrichtung (1), die kontinuierlich sowohl den Ventilhub, als auch den Arbeitswinkel (θ) des Einlassventiles (11) verändert, und eine zweite veränderbare Vorrichtung (21), die die Phase des Zentralwinkels (ϕ) verändert.

8. Vorrichtung für das kontinuierliche Steuern einer Luftmenge, angesaugt in eine Brennkraftmaschine durch ein Verändern von Betriebscharakteristika eines Einlassventiles (11), wobei die Vorrichtung aufweist:
eine erste veränderbare Vorrichtung (1) für das Verändern eines Ventilhubs des Einlassventiles (11) innerhalb eines Bereiches, in dem die Luftmenge durch einen Ventilhub und einen Ventilöffnungswinkel (θ) des Einlassventiles (11) bestimmt wird; und
eine zweite veränderbare Vorrichtung (21) für das Verändern eines Ventilphasenwinkels des Einlassventiles (11);
eine Steuereinheit (19), konfiguriert um elektronisch mit der ersten und der zweiten veränderbaren Vorrichtung (1, 21) für das veränderbare Steuern der in den Motor eingesaugten Luftmenge verbunden zu sein,
**dadurch gekennzeichnet, dass**
die Steuereinheit (19) konfiguriert ist für das Steuern des Ventilhubs des Einlassventiles (11) innerhalb des Bereiches, wobei die Luftmenge durch einen Ventilhub und einen Ventilöffnungswinkel (θ) bestimmt ist, wobei bei ein feststehender Ventilphasenwinkel gebildet wird, der im Wesentlichen einem maximalen phasenverzögerten Zeitpunktwert des Einlassventiles (11) in einem sehr niedrigen Lastbetriebsbereich (①) entspricht, der den Leerlauf enthält; und
die Steuereinheit (19) konfiguriert ist für das Steuern des Ventilhubs des Einlassventiles (11) innerhalb des Bereiches, wobei die Luftmenge durch einen Ventilhub und einen Ventilöffnungswinkel (θ) des Einlassventiles (11) gebildet wird und Steuern eines Ventilphasenwinkels des Einlassventiles (11) in Betriebsbereichen (②③④⑤⑥), mit Ausnahme des sehr niedrigen Lastbetriebsbereichs (①).

9. Vorrichtung nach Anspruch 8, **dadurch gekennzeichnet, dass** eine Motorlast, die an einer Grenze zwischen dem sehr niedrigen Lastbetriebsbereich (①) und dem niedrigen Lastbetriebsbereich (②) ist, in Abhängigkeit von entweder einem Zustand der Verbrennung des Motors oder einer Motortemperatur verändert wird.

10. Vorrichtung nach Anspruch 8 oder 9, **dadurch gekennzeichnet, dass** die Steuereinheit (19) für das Steuern des Ventilhubs innerhalb des Bereiches konfiguriert ist, in dem ein Winkel (θ₁) zwischen einer Ventilsitzfläche (43) und einem Liniensegment (M) zwischen und einschließlich einer inneren Kante (42a) der Dichtungsfläche (42) des Einlassventiles (11) und eine äußere Kante (43a) der Ventilsitzfläche (43) innerhalb eines vorbestimmten Winkelbereich von 90 Grad oder weniger ist, in dem sehr niedrigen Lastbetriebsbereich (①).

## Revendications

1. Procédé pour commander continuellement une quantité d'air aspirée par un moteur à combustion interne en faisant varier des caractéristiques de fonctionnement d'une soupape d'admission (11), le procédé comprenant les étapes consistant à:
commander une levée de la soupape d'admission (11) dans une plage dans laquelle la quantité d'air est déterminée par une levée de soupape et un angle d'ouverture de soupape (θ) de la soupape d'admission (11); et
commander un angle de phase de la soupape d'admission (11) ;
**caractérisé par**
la commande de la levée de la soupape d'admission (11) dans la plage dans laquelle la quantité d'air est déterminée par la levée de soupape et un angle d'ouverture de soupape (θ) avec un angle de phase de soupape fixé correspondant sensiblement à une valeur de réglage de retard de phase maximum de la soupape d'admission (11) dans une plage de fonctionnement sous charge très basse (①) se présentant au ralenti; et
la commande de la levée de la soupape d'admission (11) dans la plage dans laquelle la quantité d'air est déterminée par une levée de soupape et un angle d'ouverture de soupape (θ) de la soupape d'admission (11) et le réglage d'un angle de phase de la soupape d'admission (11) dans les plages de fonctionnement (②, ③, ④, ⑤, ⑥), exceptée la plage de fonctionnement sous charge très basse (①).

2. Procédé selon la revendication 1, **caractérisé en ce que** l'angle de phase de la soupape dans une plage de fonctionnement sous charge très basse (①) est réglé pour être plus proche d'un point mort bas lors de la course d'admission en comparaison avec l'angle de phase de soupape dans une plage de fonctionnement sous charge réduite (②) adjacente à la plage de fonctionnement sous charge très basse (①).

3. Procédé selon la revendication 1 ou 2, **caractérisé en ce qu'**une charge de moteur qui se situe à une limite entre la plage de fonctionnement sous charge très basse (①) et la plage de fonctionnement sous charge réduite (②) est modifiée en fonction d'un état de combustion du moteur.

4. Procédé selon l'une des revendications 1 à 3, **caractérisé en ce qu'**une charge du moteur, qui se situe à une limite entre la plage de fonctionnement sous charge très basse (①) et la plage de fonctionnement sous charge réduite (②) est variée en fonction d'une température du moteur.

5. Procédé selon au moins l'une des revendications 1 à 4, **caractérisé par** une commande de la levée de soupape dans une plage dans laquelle une zone de passage de fluide définie entre une face d'étanchéité (42) de la soupape d'admission (11) et une face de siège de soupape (43) est plus petite qu'une zone de passage de fluide à n'importe quelle autre section dans un passage d'admission d'air, dans la plage de fonctionnement sous charge très basse (①).

6. Procédé selon au moins l'une des revendications 1 à 5, **caractérisé en ce que** le moteur possède un mécanisme d'actionnement de soupape où la soupape d'admission (11) est entraînée mécaniquement en synchronisation avec la rotation d'un vilebrequin du moteur; et
le mécanisme d'actionnement de soupape possède un organe d'ajustement de jeu de soupape (31, 32, 33, 34, 35, 36, 37) qui maintient constamment un jeu de soupape à un jeu zéro.

7. Procédé selon la revendication 6, **caractérisé en ce que** le mécanisme d'actionnement de soupape comprend un premier mécanisme variable (1) qui fait varier continuellement à la fois la levée et l'angle de travail (θ) de la soupape d'admission (11), et un second mécanisme variable (21) qui fait varier la phase de l'angle central (ϕ).

8. Appareil pour commander continuellement une quantité d'air aspirée par un moteur à combustion interne en faisant varier les caractéristiques de fonctionnement d'une soupape d'admission (11), l'appareil comprenant:
un premier mécanisme variable (1) pour faire varier une levée de la soupape d'admission (11) dans une plage où la quantité d'air est déterminée par une levée de soupape et un angle d'ouverture de soupape (θ) de la soupape d'admission (11); et
un second mécanisme variable (21) pour faire varier un angle de phase de la soupape d'admission (11);
une unité de commande (19) configurée pour être reliée électroniquement aux premier et second mécanismes variables (1, 21) pour régler d'une manière variable la quantité d'air aspirée par le moteur,
**caractérisé en ce que**
l'unité de commande (19) est configurée pour commander la levée de la soupape d'admission (11) dans la plage dans laquelle la quantité d'air est déterminée par une levée de soupape et un angle d'ouverture de soupape (θ), un angle de phase de soupape fixé correspondant sensiblement à une valeur de réglage de retard de phase maximale de la soupape d'admission (11) dans une plage de fonctionnement sous charge très basse (①) au ralenti; et
l'unité de commande (19) est configurée pour commander la levée de la soupape d'admission (11) dans la plage où la quantité d'air est déterminée par une levée de soupape et un angle d'ouverture de soupape (θ) de la soupape d'admission (11) et pour commander un angle de phase de la soupape d'admission (11) dans des plages de fonctionnement (②, ③, ④, ⑤, ⑥) à l'exception de la plage de fonctionnement sous charge très basse (①).

9. Appareil selon la revendication 8, **caractérisé en ce qu'**une charge de moteur qui se situe à une limite entre la plage de fonctionnement sous charge très basse (①) et la plage de fonctionnement sous charge réduite (②) est modifiée soit en fonction d'un état de combustion du moteur soit d'une température du moteur.

10. Appareil selon la revendication 8 ou 9, **caractérisé en ce que** l'unité de commande (19) est configurée pour commander la levée de soupape dans la plage dans laquelle un angle (θ₁) entre une face de siège de soupape (43) et un segment de ligne (M) entre et incluant un bord interne (42a) de la face de scellement (42) de la soupape d'admission (11) et un bord externe (43a) de la face de siège de soupape (43) se situe dans une plage angulaire prédéterminée de 90 degrés ou moins, dans la plage de fonctionnement sous charge très basse (①).
